(19) **Europäisches Patentamt / European Patent Office / Office européen des brevets**

(11) **EP 1 120 882 B1**

(12) **FASCICULE DE BREVET EUROPEEN**

(45) Date de publication et mention
de la délivrance du brevet:
**15.04.2009 Bulletin 2009/16**

(51) Int Cl.:
**H02K 1/16** *(2006.01)* **H02K 15/02** *(2006.01)*
**H02K 1/18** *(2006.01)*

(21) Numéro de dépôt: **01400213.3**

(22) Date de dépôt: **26.01.2001**

(54) **Bande de secteurs de tôle et procédé de fabrication d'un circuit magnétique de machine électrique**

Sektorenblechband und Verfahren zur Herstellung einer magnetischen Schaltung einer elektrischen Maschine

Strip from metal sheet sectors and method of manufacturing a magnetic circuit of an electrical machine

(84) Etats contractants désignés:
**AT BE CH CY DE DK ES FI FR GB GR IE IT LI LU MC NL PT SE TR**

(30) Priorité: **28.01.2000 FR 0001125**

(43) Date de publication de la demande:
**01.08.2001 Bulletin 2001/31**

(73) Titulaire: **MOTEURS LEROY-SOMER**
**16000 Angouleme (FR)**

(72) Inventeur: **Vohlgemuth, Patrick**
**16110 La Rochefoucauld (FR)**

(74) Mandataire: **Tanty, François**
**Nony & Associés**
**3, rue de Penthièvre**
**75008 Paris (FR)**

(56) Documents cités:
**FR-A- 2 109 301**

• **PATENT ABSTRACTS OF JAPAN vol. 1999, no. 13, 30 novembre 1999 (1999-11-30) & JP 11 215745 A (SHIBAURA MECHATRONICS CORP), 6 août 1999 (1999-08-06)**
• **PATENT ABSTRACTS OF JAPAN vol. 1998, no. 03, 27 février 1998 (1998-02-27) & JP 09 308143 A (MATSUSHITA ELECTRIC IND CO LTD), 28 novembre 1997 (1997-11-28)**
• **PATENT ABSTRACTS OF JAPAN vol. 1999, no. 13, 30 novembre 1999 (1999-11-30) & JP 11 234973 A (YASKAWA ELECTRIC CORP), 27 août 1999 (1999-08-27)**

**Description**

La présente invention concerne la fabrication de circuits magnétiques, notamment le circuit magnétique statorique des machines tournantes électriques.

Il est connu de réaliser le circuit magnétique des machines tournantes électriques par empilage de tôles magnétiques pourvues d'encoches.

On connaît par la demande de brevet français FR-A- 2 109 301 un procédé de fabrication dans lequel on enroule sur un mandrin une bande de secteurs reliés entre eux par des parties rétrécies servant chacune de charnière. Une fois l'enroulement effectué, les parties rétrécies se situent à l'intérieur du diamètre extérieur du stator et ne forment pas saillie vers l'extérieur.

Lorsque les parties rétrécies sont déformées durant l'opération d'enroulement, elles tendent à prendre une légère courbure hors du plan des secteurs, ce qui tend à gêner la venue en contact face contre face des secteurs empilés.

La demande de brevet japonais JP 11 234 973A décrit une culasse formée par des secteurs reliés.

Les demandes de brevet japonais JP 09 308 143A et JP 11 215 745 décrivent des secteurs ne comportant chacun qu'une dent, reliés entre eux par des ponts de matière.

L'invention vise à faciliter et à améliorer la fabrication des circuits magnétiques des machines électriques, en particulier ceux des machines tournantes de grandes dimensions, dont le diamètre d'alésage du stator est supérieur ou égal à 300 mm.

L'invention y parvient grâce à une bande de secteurs de tôle pour la fabrication d'un circuit magnétique de machine électrique présentant les caractéristiques énoncées à la revendication 1.

Grâce à l'invention, le contact entre les secteurs de l'empilage est amélioré car les parties des liaisons qui s'étendent hors du plan des secteurs se situent hors du diamètre extérieur de l'empilage.

Dans une mise en oeuvre préférée de l'invention, les liaisons précitées sont constituées par des ponts de matière déformables ou pontets venus de découpage avec les secteurs.

En variante, les liaisons sont des liaisons articulées assurées par des agrafes.

La forme donnée aux ponts de matière précités est choisie pour leur permettre de se déformer lors de l'enroulement de la bande de secteurs sur le mandrin.

Les ponts de matière peuvent comporter chacun une portion présentant deux bords parallèles.

En variante, les ponts de matière peuvent présenter chacun deux rétrécissements de part et d'autre d'une portion médiane, ces rétrécissements constituant des zones de déformation préférentielles.

Dans une variante encore, les ponts de matière peuvent présenter chacun des bords concentriques.

Avantageusement, chaque pont de matière présente un bord situé dans le prolongement du bord latéral ou flanc d'accostage d'un secteur auquel il se raccorde.

Avantageusement, les secteurs comportent sur leurs flancs d'accostage des profils complémentaires destinés à assurer un positionnement radial correct des secteurs lors de l'enroulement.

Ces profils complémentaires peuvent comporter une dent sur l'un des flancs et une encoche sur l'autre flanc de préférence de forme complémentaire, la dent présentant de préférence des bords convergents et l'encoche des bords divergents.

L'invention a encore pour objet un procédé de fabrication d'un circuit magnétique de machine électrique, présentant les caractéristiques énoncées à la revendication 11.

On évite ainsi de superposer les liaisons, plus épaisses que les secteurs, ce qui autrement empêcherait les couches d'être entièrement jointives.

De préférence, la longueur des secteurs est choisie de manière à limiter la fréquence de superposition des jonctions des secteurs.

Ainsi, on évite la superposition des coupures de circuit magnétique, ce qui limite les pertes électriques et assure une meilleure cohésion mécanique de l'empilage.

Grâce à l'invention, on peut aisément réaliser en continu un circuit magnétique de machine électrique en enroulant la bande de secteurs sur un mandrin dont le diamètre extérieur est par exemple supérieur ou égal à 300 mm.

De préférence, le mandrin précité est entraîné en rotation.

Avantageusement, $n_d$ est choisi parmi les valeurs suivantes : 48 ; 60 ; 72 ; 84 ; 96, j est compris entre 1 et 3, et k est supérieur ou égal à 3, de préférence égal à 6.

L'invention a encore pour objet un circuit magnétique de machine électrique présentant les caractéristiques énoncées à la revendication 16.

Dans une réalisation particulière, des barres sont fixées sur la périphérie de l'empilage, étant engagées sur ou entre les liaisons déformables et/ou articulées reliant les secteurs.

Avantageusement, lesdites liaisons déformables et/ou articulées servent de guides pour fixer ces barres, lesquelles servent à maintenir les couches de secteurs jointives et constituent avantageusement des canaux de refroidissement avec le carter de la machine.

Le fait que les liaisons entre secteurs fassent saillie à l'extérieur de l'empilage augmente la surface d'échange dans le canal d'air de refroidissement autour du circuit magnétique.

De plus, leur répartition discontinue dans le canal d'air a pour effet de rendre l'écoulement de l'air plus turbulent et d'augmenter le coefficient d'échange thermique.

L'invention a encore pour objet une machine électrique, caractérisée par le fait qu'elle comporte un circuit magnétique, notamment un stator, tel que défini plus haut.

L'invention sera mieux comprise à la lecture de la description détaillée qui va suivre, d'exemples de mise en oeuvre non limitatifs, et à l'examen du dessin annexé, sur lequel :

- la figure 1 est une vue schématique illustrant l'enroulement des secteurs autour d'un mandrin entraîné en rotation, pour constituer un empilage de tôles magnétiques,
- la figure 2 représente à échelle agrandie un détail de la liaison par agrafe entre deux secteurs consécutifs de la bande de secteurs,
- les figures 3 à 6 illustrent diverses variantes de réalisation des liaisons déformables entre les secteurs,
- la figure 7 représente le stator d'une machine tournante électrique réalisé par la mise en oeuvre du procédé selon l'invention,
- la figure 8 représente une liaison entre secteurs avec des profils complémentaires sur les flancs d'accostage, et
- la figure 9 est une vue schématique illustrant la non superposition directe des jonctions entre les secteurs.

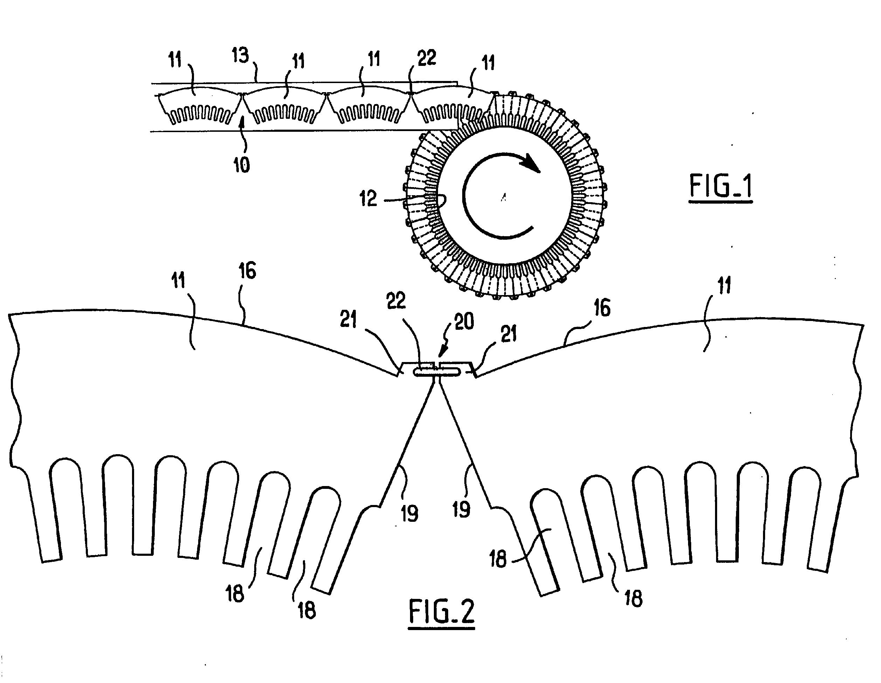

On a représenté sur la figure 1 une bande 10 de secteurs 11 en cours d'enroulement sur un mandrin 12 entraîné en rotation autour d'un axe perpendiculaire au plan de la figure.

Le diamètre extérieur du mandrin 12 est supérieur ou égal à 300 mm dans l'exemple de réalisation décrit.

Les secteurs 11 peuvent être guidés dans leur déplacement vers le mandrin 12 par une goulotte ou tapis 13 et proviennent d'un poste de découpage et d'agrafage non représenté.

On a représenté à échelle agrandie sur la figure 2 deux secteurs 11 consécutifs de la bande 10, reliés par une liaison articulée 20.

Cette liaison articulée 20 est constituée dans l'exemple décrit par une agrafe 22 dont les extrémités sont engagées dans des perçages réalisés sur des pattes 21 formées à la périphérie extérieure 16 des secteurs 11, formant saillie vers l'extérieur.

Des encoches 18 sont réalisées sur les secteurs 11, sur leur côté radialement intérieur, pour servir au bobinage des enroulements du stator, de manière connue en soi.

Le stator comporte ici 72 encoches et les secteurs 11 comportent chacun dix encoches.

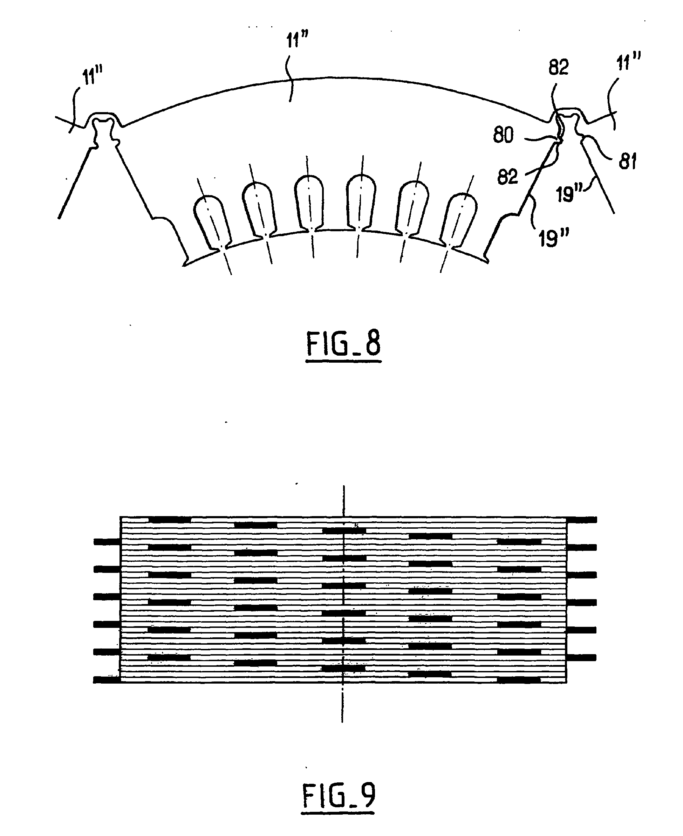

Il en résulte que les lignes de jonction entre deux secteurs 11 consécutifs, d'une couche à la suivante de l'empilage, ne se superposent pas mais sont décalées, comme illustré notamment à la figure 9.

Sur cette figure, on voit que les liaisons entre les secteurs, schématisées par des bandes noires, ne se superposent pas d'une couche de secteurs à la suivante, mais toutes les cinq couches de secteurs.

On évite ainsi que les liaisons se superposent, ce qui autrement gênerait l'empilage des couches de secteurs.

On remarquera sur la figure 2 que deux secteurs 11 consécutifs présentent, lorsqu'ils sont au sein de la bande, des bords adjacents ou flancs d'accostage 19 formant un angle entre eux, l'opération d'enroulement sur le mandrin 12 ayant pour résultat de rapprocher ces deux bords 19 au point de les rendre jointifs.

On peut réaliser les liaisons entre les secteurs autrement qu'au moyen d'agrafes.

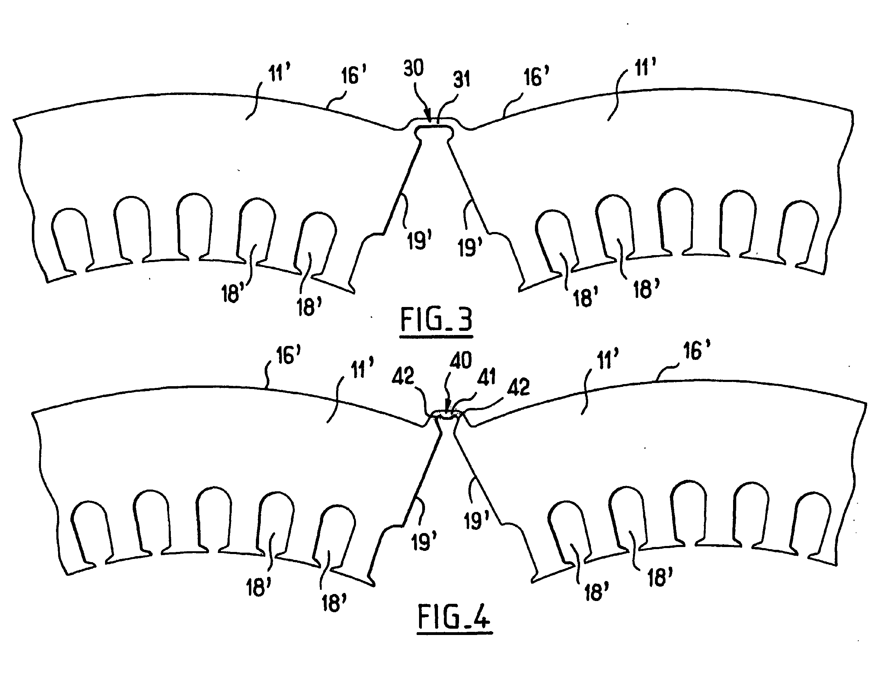

En particulier, on peut utiliser des ponts de matière ou pontets réalisés par découpage d'un seul tenant avec les secteurs, comme illustré sur les figures 3 à 6.

On voit sur ces figures que diverses formes peuvent être données aux ponts de matière réunissant deux secteurs consécutifs.

Dans l'exemple de réalisation de la figure 3, on a représenté deux secteurs 11' consécutifs reliés par un pont de matière 30 réalisé par découpe d'un seul tenant avec les secteurs 11'.

Ce pont de matière 30 se raccorde à une extrémité au bord périphérique extérieur 16' d'un secteur 11' et présente une portion médiane 31 de largeur constante.

La portion médiane 31 précitée se déforme légèrement hors de son plan lorsque les bords adjacents 19' des secteurs 11' sont rapprochés lors de l'enroulement sur le mandrin 12.

Les secteurs 11' comportent des encoches 18'.

Le pont de matière 40 de l'exemple de réalisation de la figure 4 se distingue du précédent par le fait qu'il comporte, de part et d'autre d'une portion médiane 41, deux rétrécissements 42 destinés à créer des zones de déformation préférentielles.

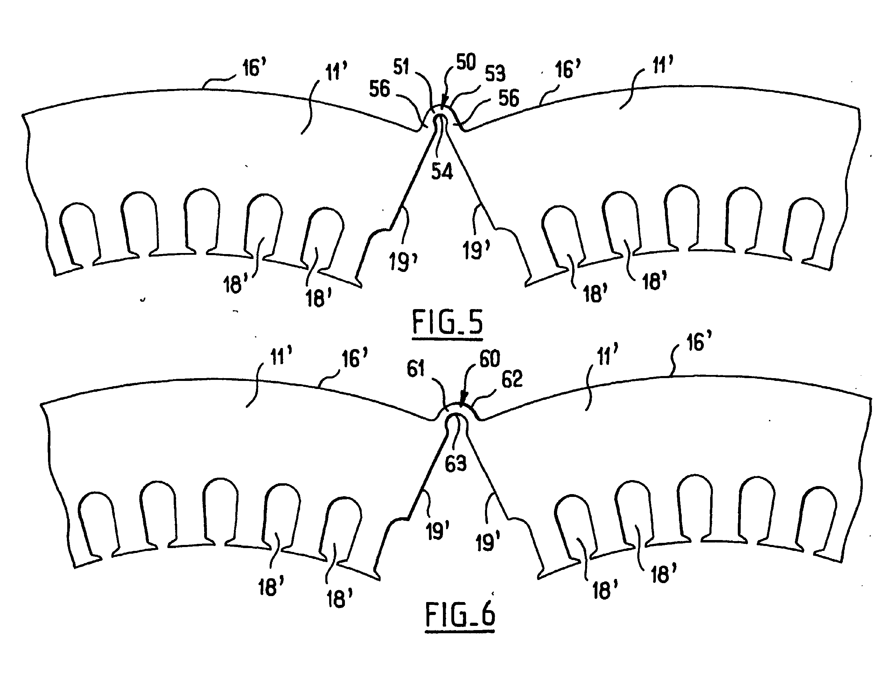

Le pont de matière 50 de l'exemple de réalisation de la figure 5 comporte une portion médiane 51 de largeur constante, délimitée radialement par deux bords circulaires 53 et 54 concentriques.

La portion médiane 51 s'élargit à ses extrémités et se raccorde aux secteurs 11' par des portions 56 s'étendant sensiblement radialement lorsque le stator est constitué.

Le pont de matière 60 de l'exemple de réalisation de la figure 6 comporte une portion médiane 61 de largeur constante, délimitée radialement par deux bords circulaires 62 et 63 concentriques.

Le pont de matière 60 présente un rayon de courbure moins important que celui décrit en référence à la figure 5.

Dans les exemples des figures 3 à 6, les liaisons font saillie à l'extérieur des secteurs, c'est-à-dire qu'elles s'étendent en dehors du diamètre extérieur du stator et ne gênent par conséquent pas l'empilage.

Les liaisons s'étendent par exemple sur une distance radiale, vers l'extérieur du stator, supérieure ou égale à 1/10 de la dimension maximale, dans le sens radial, d'un secteur.

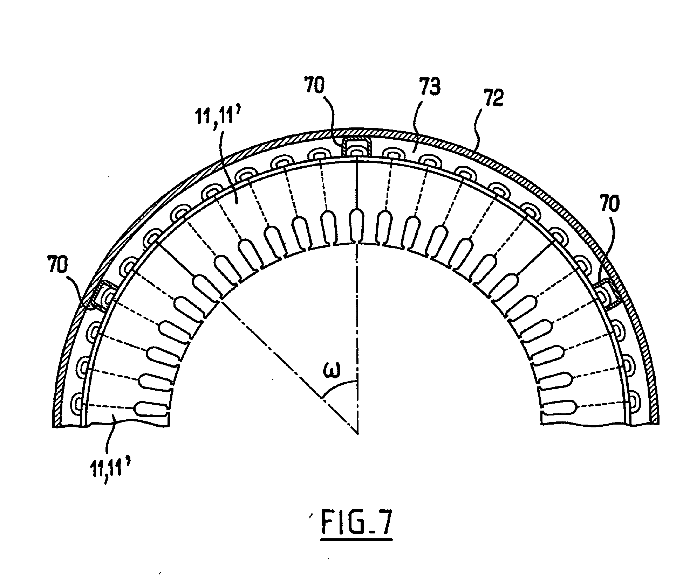

On a représenté sur la figure 7 un circuit magnétique de stator constitué par un empilage de secteurs 11 ou 11'.

Des barres 70, ayant une section transversale en U, sont fixées sur l'extérieur de l'empilage pour assembler les différentes couches, rigidifier l'ensemble et constituer des entretoises entre le circuit magnétique et le carter 72 de la machine.

Les barres 70 forment entre elles, entre le carter 72 et le circuit magnétique du stator, des canaux 73 de refroidissement.

Les barres 70 sont conformées pour s'engager sur les liaisons entre les secteurs, ces dernières servant de guides.

La mise en place des barres 70 avant leur fixation sur l'empilage, par soudure par exemple, s'en trouve facilitée.

On remarquera que la répartition des liaisons dans le canal de refroidissement entre le carter 72 et le stator permet d'augmenter le coefficient d'échange thermique.

Bien entendu, l'invention n'est pas limitée aux exemples de réalisation qui viennent d'être décrits.

On peut notamment utiliser d'autres moyens que ceux décrits pour relier d'une manière articulée les secteurs entre eux.

On peut encore avantageusement réaliser sur les flancs d'accostage des secteurs des profils complémentaires destinés à améliorer le positionnement, dans le sens radial, d'un secteur par rapport au secteur adjacent, sur le mandrin d'enroulement.

A titre d'exemple, on a représenté à la figure 8 deux secteurs 11" qui diffèrent des secteurs représentés à la figure 4 simplement par le fait qu'une dent 80 est réalisée sur l'un des flancs d'accostage 19" et qu'une encoche 81 de forme complémentaire est réalisée sur le flanc d'accostage 19" adjacent.

La dent 80 s'étend selon un axe qui est perpendiculaire à un rayon lorsque l'enroulement a été effectué, et présente des bords convergents 82 destinés à faciliter son engagement dans l'encoche 81.

## Revendications

1.  Bande de secteurs (11 ; 11' ; 11") de tôle pour la fabrication d'un circuit magnétique de machine électrique, les secteurs comportant des encoches, les secteurs étant reliés entre eux par des liaisons, cette bande étant destinée à être enroulée sur un mandrin pour former un empilage de couches de secteurs, lesdites liaisons étant extérieures aux secteurs et la largeur angulaire ($\omega$) d'un secteur étant égale à

    $360°.(\dfrac{1}{k} \pm j/n_d)$, où $n_d$ est le nombre total d'encoches par révolution complète, k est un entier non nul sous multiple entier de $n_d$ et j est un entier non nul.,

2.  Bande selon la revendication précédente, **caractérisée par le fait que** les liaisons (30 ; 40 ; 50 ; 60) sont constituées par des ponts de matière déformables venus de découpage avec les secteurs (11').

3.  Bande selon la revendication précédente, **caractérisée par le fait que** les ponts de matière comportent chacun une portion (31) présentant deux bords parallèles.

4.  Bande selon la revendication 2, **caractérisée par le fait que** les ponts de matière présentent chacun deux rétrécissements (42) de part et d'autre d'une portion médiane (41).

5.  Bande selon la revendication 2, **caractérisée par le fait que** les ponts de matière (50 ; 60) présentent chacun des bords concentriques (53, 54 ; 62, 63).

6.  Bande selon l'une quelconque des revendications 2 à 5, **caractérisée par le fait que** chaque pont de matière (30 ; 40 ; 50 ; 60) présente un bord situé dans le prolongement du bord latéral (19') d'un secteur (11') auquel il se raccorde.

7.  Bande selon la revendication 1, **caractérisée par le fait que** les secteurs (11) sont reliés par des agrafes (22).

8.  Bande selon l'une quelconque des revendications précédentes, **caractérisée par le fait que** chaque secteur comporte au moins une encoche pour le passage de conducteurs électriques.

9.  Bande selon l'une quelconque des revendications précédentes, **caractérisée par le fait que** les secteurs comportent sur leurs flancs d'accostage (19") des profils complémentaires.

10. Bande selon la revendication 9, **caractérisée par le fait que** l'un des flancs d'accostage comporte une dent (80) et l'autre une encoche (81).

11. Procédé de fabrication d'un circuit magnétique de machine électrique, **caractérisé par le fait qu'**il comporte les étapes consistant à :

    - réaliser une bande de secteurs (11 ; 11' ; 11") de tôle reliés entre eux par des liaisons déformables et/ou articulées (20 ; 30 ; 40 ; 50 ; 60), deux secteurs consécutifs (11 ; 11') présentant au sein de cette bande des bords latéraux adjacents (19 ; 19' ; 19") formant un angle entre eux,

- enrouler la bande de secteurs sur un mandrin de manière à rapprocher lesdits bords (19 ; 19' ; 19") et constituer un empilage de couches de secteurs, chaque secteur étant découpé de manière à ce que sa largeur angulaire soit différente d'un sous-multiple entier d'une révolution complète la largeur angulaire ($\omega$) d'un secteur étant

égale à 360° $(\frac{l}{k} \pm j/n_d)$, où $n_d$ est le nombre total d'encoches par révolution complète, k est un entier non nul sous multiple entier de $n_d$ et j est un entier non nul.,

**12.** Procédé selon la revendication 11, **caractérisé par le fait que** l'on enroule la bande (10) sur un mandrin (12) dont le diamètre extérieur est supérieur ou égal à 300 mm.

**13.** Procédé selon la revendication 11 ou 12, **caractérisé par le fait que** ledit mandrin (12) est entraîné en rotation.

**14.** Procédé selon la revendication 11 **caractérisé par le fait que** $n_d$ est choisi parmi les valeurs suivantes : 48 ; 60 ; 72 ; 84 ; 96, j est compris entre 1 et 3, et k est supérieur ou égal à 3, de préférence égal à 6.

**15.** Procédé selon l'une quelconque des revendications 11 à 14, **caractérisé par le fait que** l'on utilise les liaisons (20 ; 30 ; 40 ; 50 ; 60) entre secteurs (11 ; 11') comme guidés pour fixer des barres (70) sur l'empilage de tôles.

**16.** Circuit magnétique de machine électrique, **caractérisé par le fait qu'**il comporte un empilage de couches de secteurs (11 ; 11' ; 11") comportant des encoches, formé par l'enroulement en hélice d'une bande (10) de secteurs reliés entre eux par des liaisons déformables et/ou articulées (20 ; 30 ; 40 ; 50 ; 60), situées en périphérie, en dehors des secteurs empilés la largeur angulaire ($\omega$) d'un secteur

étant égale à 360° .$(\frac{l}{k} \pm j/n_d)$, où $n_d$ est le nombre total d'encoches par révolution complète, k est un entier non nul sous multiple entier de $n_d$ et j est un entier non nul. ,

**17.** Circuit selon la revendication précédente, **caractérisé par le fait que** chaque secteur (11 ; 11' ; 11") présente une largeur angulaire ($\omega$) différente d'un sous multiple entier d'une révolution complète.

**18.** Circuit selon la revendication 16, **caractérisé par le fait que** $n_d$ est choisi parmi les valeurs suivantes : 48 ; 60 ; 72 ; 84 ; 96, j est compris entre 1 et 3, et k est supérieur ou égal à 3, de préférence égal à 6.

**19.** Circuit selon l'une quelconque des trois revendications immédiatement précédentes, **caractérisé par le fait que** le diamètre intérieur de l'empilage est supérieur ou égal à 300 mm.

**20.** Circuit selon l'une quelconque des revendications 16 à 19, **caractérisé par le fait que** les liaisons déformables sont constituées par des ponts de matière (30 ; 40 ; 50 ; 60) venus de découpage avec les secteurs (11' ; 11").

**21.** Circuit selon l'une quelconque des revendications 16 à 19, **caractérisé par le fait que** les liaisons déformables comprennent des agrafes (22).

**22.** Circuit selon l'une quelconque des revendications 16 à 21, **caractérisé par le fait que** des barres (70) sont fixées sur la périphérie de l'empilage, étant engagées sur ou entre les liaisons (20 ; 30 ; 40 ; 50 ; 60) reliant les secteurs.

**23.** Machine électrique, **caractérisée par le fait qu'**elle comporte un circuit magnétique tel que défini dans l'une quelconque des revendications 16 à 22.

**24.** Machine selon la revendication précédente, **caractérisée par le fait que** lesdites barres (70) constituent avec un carter (72) de la machine des canaux de refroidissement (73).

**Claims**

1. Sheet-metal sectored strip (11, 11', 11") for producing a magnetic circuit of an electrical machine, the sectors having notches and being connected to each other by links, this strip then being rolled around a winding tube to form a stack of layers of sectors, the said links being outside the sectors, whereby the angular width $\omega$ of a sector is equal to 360° ($l/k \pm j/n_d$) where $n_d$ is the total number of notches per complete revolution, k is an integer that is not 0 and is a submultiple integer of $n_d$, and j is an integer that is not 0.

2. Strip in accordance with the preceding claim, **characterized in that** the links (30; 40; 50; 60) comprise deformable bridge pieces arising from cutting the sectors (11').

3. Strip in accordance with the preceding claim, **characterized in that** the bridging material in each case comprises a section (31) having two parallel edges.

4. Strip in accordance with claim 2, **characterized in that** the bridges each have two narrow points (42) on either side of a middle section (41).

5. Strip in accordance with claim 2, **characterized in that** the bridges (50, 60) have concentric edges (53, 54; 62, 63).

6. Strip in accordance with any one of claims 2 to 5, **characterized by** the fact that each bridge (30; 40; 50; 60) has an edge that is located in the extension of the lateral edge (19') of a sector (11') to which it is linked.

7. Strip in accordance with claim 1, **characterized in that** the sectors (11) are connected by clips (22).

8. Strip in accordance with any one of the above claims, **characterized in that** each sector has at least one notch to pass electrical conductors through.

9. Strip in accordance with any one of the above claims, **characterized in that** the sectors have complementary forms on their sides coming alongside each other.

10. Strip in accordance with claim 9, **characterized in that** one of the pair of sides that come alongside each other has a tooth (80) and the other side has a notch (81).

11. Process for producing a magnetic circuit of an electrical machine, **characterized in that** it has the following stages:

   - making the sheet-metal sectored strip (11, 11', 11"), whereby the sectors concerned are connected to each other by deformable and/or articulated links (20; 30; 40; 60), two successive sectors (11; 11') having lateral adjacent edges (19, 19', 19") within this strip,
   - rolling up this strip onto a winding tube so as to bring the said edges (19, 19', 19") towards each other and to create a stack of layers of sectors, each sector being cut such that the angular width differs by a full sub-multiple of a full revolution, the angular width $\omega$ of a sector being equal to 360° ($l/k \pm j/n_d$) where $n_d$ is the total number of notches per complete revolution, k is an integer that is not 0 and is a sub-multiple integer of $n_d$, and j is an integer that is not 0.

12. Process in accordance with claim 11, **characterized in that** the strip (10) is wound onto a winding tube (12) the outer diameter of which is greater than or equal to 300 mm.

13. Process in accordance with claims 11 or 12, **characterized in that** the said winding tube (12) is driven in rotation.

14. Process in accordance with claim 11, **characterized in that** $n_d$ has one of the following values: 48; 60; 72; 84; 96; j has a value of 1 to 3 and k is greater than or equal to three, and preferably has a value of 6.

15. Process in accordance with any one of claims 11 to 14, **characterized in that** links (20; 30; 40; 50; 60) between sectors (11, 11') are used as guides for fixing rods (70) onto the stack of metal sheets.

16. Magnetic circuit of an electrical circuit **characterized in that** it has a stack of layers of sectors (11, 11', 11") having notches, formed by helically rolling a strip (10) of sectors that are connected to each other by peripheral deformable and/or jointed links (20; 30; 40; 50; 60) outside of the stacked sectors, and with the angular width $\omega$ of a sector being equal to 360° ($l/k \ j/n_d$) where $n_d$ is the total number of notches per complete revolution, k is an integer that is not 0 and is a sub-multiple integer of $n_d$, and j is an integer that is not 0.

17. Circuit in accordance with the preceding claim, **characterized in that** each sector (11, 11', 11") has an angular width ($\omega$) differing by a full sub-multiple from a full revolution.

18. Circuit in accordance with claim 16, **characterized in that** $n_d$ is selected from among the following values: 48; 60; 72; 84; 96, j has a value between 1 and 3 and k is greater than or equal 3, and is preferably equal to 6.

19. Circuit in accordance with any one of the three preceding claims, **characterized in that** one rolls the strip (10) onto a winding tube (12) the outer diameter of which is greater than or equal to 300 mm.

20. Circuit in accordance with any one of claims 16 to 19, **characterized in that** the deformable links comprise bridges (30; 40; 50; 60) cut together with the sectors (11'; 11").

21. Circuit in accordance with any one of claims 16 to 19, **characterized in that** the deformable links comprise clips (22).

22. Circuit in accordance with any one of claims 16 to 21, **characterized in that** the rods (70) are attached to the periphery of the stack and are engaged on or between the links (20; 30; 40; 50; 60) connecting the sectors.

23. Electrical machine, **characterized in that** it comprises a magnetic circuit as defined in any one of claims 16 to 22.

24. Machine in accordance with the preceding claim, **characterized in that** the said rods (70) form, together with a casing (72) of the machine, cooling channels (73).

**Patentansprüche**

1. Blechband mit Sektoren (11; 11'; 11") zur Herstellung eines Magnetkreises einer Elektromaschine, wobei die Sektoren Kerben aufweisen und aneinander durch Verbindungen befestigt sind, wobei das Band dazu ausgelegt ist, auf einer Hülse aufgerollt zu werden, um eine Aufeinanderreihung von Sektorschichten zu bilden, wobei sich die Verbindungen außen an den Sektoren befinden und die Winkelbreite ($\omega$) eines Sektors gleich 360°· (l/k $\pm$ j/$n_d$) ist, wobei $n_d$ die Gesamtzahl von Kerben pro vollständiger Umdrehung ist, k ein ganzzahliger Teiler von $n_d$ ungleich 0 ist und j eine ganze Zahl ungleich 0 ist.

2. Band nach dem vorhergehenden Anspruch, **gekennzeichnet dadurch, daß** die Verbindungen (30; 40; 50; 60) aus verformbaren Materialbrücken gebildet sind, die durch Zerschneiden zusammen mit den Sektoren (11') entstanden sind.

3. Band nach dem vorhergehenden Anspruch, **gekennzeichnet dadurch, daß** die Materialbrücken jeweils einen Abschnitt (31) aufweisen, der zwei parallele Kanten vorweist.

4. Band nach Anspruch 2, **gekennzeichnet dadurch, daß** die Materialbrücken jeweils zwei Verjüngungen (42) auf beiden Seiten eines mittleren Abschnitts (41) vorweisen.

5. Band nach Anspruch 2, **gekennzeichnet dadurch, daß** die Materialbrücken (50; 60) jeweils konzentrische Kanten (53, 54; 62, 63) vorweisen.

6. Band nach einem der Ansprüche 2 bis 5, **gekennzeichnet dadurch, daß** jede Materialbrücke (30; 40; 50; 60) eine Kante vorweist, die sich in der Verlängerung der seitlichen Kante (19') eines Sektors (11'), an den sie anschließt, befindet.

7. Band nach Anspruch 1, **gekennzeichnet dadurch, daß** die Sektoren (11) durch Spangen (22) befestigt sind.

8. Band nach einem der vorhergehenden Ansprüche, **gekennzeichnet dadurch, daß** jeder Sektor mindestens eine Kerbe für die Durchführung von elektrischen Leitungen umfaßt.

9. Band nach einem der vorhergehenden Ansprüche, **gekennzeichnet dadurch, daß** die Sektoren komplementäre Profile auf ihren Aneinanderlegeseiten (19") aufweisen.

10. Band nach Anspruch 9, **gekennzeichnet dadurch, daß** eine der Aneinanderlegeseiten einen Zahn (80) und die andere eine Kerbe (81) aufweist.

11. Herstellungsverfahren für einen Magnetkreis einer Elektromaschine, **gekennzeichnet dadurch, daß** es die folgenden Schritte umfaßt:

    Anfertigen eines Blechbands mit Sektoren (11; 11'; 11"), die durch verformbare und/oder gelenkige Verbindungen (20; 30; 40; 50; 60) aneinander befestigt sind, wobei zwei aufeinanderfolgende Sektoren (11; 11') innerhalb des Bandes seitlich aneinanderliegende Kanten (19; 19'; 19") vorweisen, die zwischeneinander einen Winkel bilden,
    Aufrollen des Bandes mit Sektoren auf eine Hülse, so daß die Kanten (19; 19'; 19") ane inanderrücken und eine Aufeinanderreihung von Sektorschichten bilden, wobei jeder Sektor so zugeschnitten ist, daß seine Winkelbreite ungleich einem ganzzahligen Teiler einer vollständigen Umdrehung ist, wobei die Winkelbreite ($\omega$) eines Sektors gleich 360°·(l/k $\pm$ j/$n_d$) ist, wobei $n_d$ die Gesamtzahl von Kerben pro vollständiger Umdrehung ist, k ein ganzzahliger Teiler von $n_d$ ungleich 0 ist und j eine ganze Zahl ungleich 0 ist.

12. Verfahren nach Anspruch 11, **gekennzeichnet dadurch, daß** das Band (10) auf eine Hülse (12), deren Außendurchmesser größer oder gleich 300 mm ist, aufgewickelt wird.

13. Verfahren nach Anspruch 11 oder 12, **gekennzeichnet dadurch, daß** die Hülse (12) rotiert wird.

14. Verfahren nach Anspruch 11, **gekennzeichnet dadurch, daß** $n_d$ aus den folgenden Werten gewählt wird: 48; 60; 72; 84; 96, wobei j zwischen 1 und 3 liegt und k größer oder gleich 3 ist, vorzugsweise gleich 6 ist.

15. Verfahren nach einem der Ansprüche 11 bis 14, **gekennzeichnet dadurch, daß** die Verbindungen (20; 30; 40; 50; 60) zwischen Sektoren (11; 11') wie Führungen zum Befestigen von Holmen (70) auf der Aufeinanderreihung von Blechen verwendet werden.

16. Magnetkreis einer Elektromaschine, **gekennzeichnet dadurch, daß** er eine Aufeinanderreihung von Schichten aus Sektoren (11; 11' ; 11") umfaßt, die Kerben aufweisen, wobei die Aufeinanderreihung durch wendelförmiges Aufwickeln eines Bandes (10) aus Sektoren gebildet ist, die durch verformbare und/oder gelenkige Verbindungen (20; 30; 40; 50; 60), die sich am Rand außerhalb der aufeinandergereihten Sektoren befinden, aneinander befestigt sind, wobei die Winkelbreite ($\omega$) eines Sektors gleich 360°· (l/k $\pm$ j/$n_d$) ist, wobei $n_d$ die Gesamtzahl von Kerben pro vollständiger Umdrehung ist, k ein ganzzahliger Teiler von $n_d$ ungleich 0 ist und j eine ganze Zahl ungleich 0 ist.

**17.** Kreis nach dem vorhergehenden Anspruch, **gekennzeichnet dadurch, daß** jeder Sektor (11; 11'; 11") eine Winkelbreite ($\omega$) vorweist, die ungleich einem ganzzahligen Teiler einer vollständigen Umdrehung ist.

**18.** Kreis nach Anspruch 16, **gekennzeichnet dadurch, daß** $n_d$ aus den folgenden Werten gewählt wird: 48; 60; 72; 84; 96, j zwischen 1 und 3 liegt und k größer oder gleich 3 ist, vorzugsweise gleich 6 ist.

**19.** Kreis nach einem der drei unmittelbar vorhergenenden Ansprüche, **gekennzeichnet dadurch, daß** der Innendurchmesser der Aufeinanderreihung größer oder gleich 300 mm ist.

**20.** Kreis nach einem der Ansprüche 16 bis 19, **gekennzeichnet dadurch, daß** die verformbaren Verbindungen aus Materialbrücken (30; 40; 50; 60) gebildet sind, die durch Zerschneiden zusammen mit den Sektoren (11'; 11") entstanden sind.

**21.** Kreis nach einem der Ansprüche 16 bis 19, **gekennzeichnet dadurch, daß** die verformbaren Verbindungen Spangen (22) aufweisen.

**22.** Kreis nach einem der Ansprüche 16 bis 21, **gekennzeichnet dadurch, daß** die Holme (70) auf dem Rand der Aufeinanderreihung befestigt sind und sich auf oder zwischen den die Sektoren befestigende Verbindungen (20; 30; 40; 50; 60) im Eingriff befinden.

**23.** Elektromaschine, **gekennzeichnet dadurch, daß** sie einen Magnetkreis, so, wie er durch einen der Ansprüche 16 bis 22 definiert ist, umfaßt.

**24.** Maschine nach dem vorhergehenden Anspruch, **gekennzeichnet dadurch, daß** die Holme (70) zusammen mit einem Gehäuse (72) der Maschine Kühlungskanäle (73) bilden.

FIG.1

FIG.2

EP 1 120 882 B1

FIG.3

FIG.4

EP 1 120 882 B1

FIG.5

FIG.6

EP 1 120 882 B1

FIG.7

FIG_8

FIG_9

**EP 1 120 882 B1**

## RÉFÉRENCES CITÉES DANS LA DESCRIPTION

**Documents brevets cités dans la description**

- FR 2109301 A
- JP 11234973 A
- JP 09308143 A
- JP 11215745 B